# EUROPÄISCHE PATENTSCHRIFT

(11) **EP 0 607 858 B1**
(45) Veröffentlichungstag und Bekanntmachung des Hinweises auf die Patenterteilung: **24.07.1996**
(21) Anmeldenummer: 94100372.5
(22) Anmeldetag: 12.01.1994
(51) Int. Cl.: F16D 66/02

(54) **Für Scheibenbremsen mit Verschleisswarneinrichtung vorgesehene Bremsbackenanordnung sowie Verfahren zu deren Herstellung**
Brake pad arrangement for disc brakes with wear detection device and procedure for its manufacture
Arrangement de plaquettes pour freins à disque à témoin d'usure et procédé pour leur fabrication

(30) Priorität: 18.01.1993 DE 4301129
(43) Veröffentlichungstag der Anmeldung: 27.07.1994
(73) Patentinhaber: LUCAS INDUSTRIES public limited company, Solihull, West Midlands B91 3TX (GB)
(72) Erfinder: Walden, Michael, D-56626 Andernach (DE)
(74) Vertreter: Goetz, Rupert, Dipl.-Ing.

(56) Entgegenhaltungen:
- EP-A- 0 475 335
- JP-U-50 121 181

## Beschreibung

Die Erfindung betrifft eine für Scheibenbremsen mit Verschleißwarneinrichtung vorgesehene Bremsbackenanordnung mit
- einer Stützplatte, die einen radial äußeren Rand sowie einen an diesen angrenzenden reibbelagfreien Bereich mit einer radial nach außen offenen Aussparung aufweist,
- einem Reibbelag, der an der Stützplatte befestigt ist und ein Loch aufweist, welches von einem radial innerhalb der Aussparung nahe der Stützplatte liegenden Ausgangspunkt ausgeht,
- einem Tragkörper, der radial in die Aussparung eingeschoben ist, und
- einem Fühler, der am Tragkörper befestigt, in das Loch eingechoben und an eine Warneinrichtung zum Anzeigen von Belagverschleiß anschließbar ist.

Ferner betrifft die Erfindung ein Verfahren zum Herstellen einer solchen Bremsbackenanordnung.

Aus der EP 0 475 335 A1 ist eine Bremsbackenanordnung der genannten Gattung bekannt, bei der sich der Fühler parallel zur Stützplatte und zu der Richtung, in welcher der Tragkörper in die Aussparung eingeschoben wird, radial in den Reibbelag erstreckt. Die geometrische Achse des Lochs hat von der ihr zugewandten Fläche der Stützplatte einen Abstand, der kaum größer ist als der Lochradius. Bei fortschreitendem Verschleiß des Reibbelags nähert sich dessen Reibfläche dem im Loch steckenden Teil des Fühlers und erreicht diesen schließlich, so daß ein den Fühler bildender oder in ihn eingebetteter elektrischer Leiter die Bremsscheibe berührt, wodurch ein elektrischer Stromkreis geschlossen und infolgedessen ein Warnsignal abgegeben wird. Wenn dies geschieht, hat der Reibbelag noch eine Restdicke, die ungefähr mit dem Durchmesser des Lochs übereinstimmt und in der Praxis beispielsweise 2 mm beträgt. Dies wird im allgemeinen als ausreichend angesehen, wenn damit gerechnet werden kann, daß der Fahrer eines mit solchen Bremsbackenanordnungen und einer zugehörigen Warneinrichtung ausgerüsteten Fahrzeugs nach dem erstmaligen Auftreten eines Warnsignals alsbald dafür sorgt, daß die abgenutzten Bremsbacken ersetzt werden.

In manchen Fällen ist es jedoch wünschenswert, daß ein Warnsignal schon bei weniger weit fortgeschrittenem Verschleiß abgegeben wird, beispielsweise dann, wenn der Reibbelag noch eine Restdicke von 3,5 mm aufweist. In solchen Fällen ist es ohne weiteres möglich, in die zu überwachenden Reibbeläge ein Loch in entsprechend größerem Abstand von der Stützplatte parallel zu dieser zu bohren und einen Fühler zu verwenden, der an einem entsprechend verlängerten Tragkörper befestigt ist.

Aus der JP 50-121181 U sind ferner Bremsbackenanordnungen bekannt, bei denen ein als Fühler einer Verschleißwarneinrichtung dienender elektrischer Leiter wahlweise parallel oder schräg zur Stützplatte in den Reibbelag eingebettet und dadurch an der Bremsbacke befestigt ist; ein an der Stützplatte befestigter Tragkörper ist nicht vorgesehen. Das in den Reibbelag eingebettete Ende des Fühlers hat von der Stützplatte einen bestimmten Abstand, der unabhängig davon ist, ob der Fühler parallel zur Stützplatte oder schräg zu ihr in den Reibbelag eingebettet ist. In beiden Fällen tritt also ein Warnsignal bei der gleichen Restdicke des Reibbelags auf.

Der Erfindung liegt die Aufgabe zugrunde, eine für Scheibenbremsen mit Verschleißwarneinrichtung vorgesehene Bremsbackenanordnung derart zu gestalten, daß sie mit möglichst geringen herstellungstechnischen Änderungen in zwei oder mehr Varianten herstellbar ist, welche sich in der Restdicke des Reibbelags unterscheiden, bei der ein Warnsignal abgegeben wird.

Die Aufgabe ist erfindungsgemäß ausgehend von einer Bremsbackenanordnung der eingangs beschriebenen Gattung dadurch gelöst, daß
- das Loch schräg zur Stützplatte, von dieser mit zunehmendem Abstand vom Ausgangspunkt divergierend, angeordnet ist, und
- der im Loch aufgenommene Teil des Fühlers in bezug auf die Einschubrichtung des Tragkörpers abgewinkelt ist.

Eine solche Bremsbackenanordnung wird vorzugsweise derart hergestellt, daß
- ein Loch zum Aufnehmen eines Fühlers schräg zur Stützplatte einer Bremsbacke in deren Reibbelag eingearbeitet wird,
- ein Fühler verwendet wird, der sich von einem Tragkörper, an dem er befestigt ist, radial wegerstreckt, so daß er parallel zur Stützplatte angeordnet ist, wenn der Tragkörper in eine sein radiales Einschieben in eine Aussparung der Stützplatte vorbereitende Stellung gebracht wird, und
- der Fühler beim radialen Einschieben des Tragkörpers in die Aussparung in dem Maß abgebogen wird, in dem er in das Loch eindringt.

Erfindungsgemäß können somit zwei oder mehr Varianten einer mit einem Fühler ausgestatteten Bremsbackenanordnung aus gleichen Bremsbacken, gleichen Tragkörpern und gleichen Fühlern hergestellt werden. In jedem Fall wird in den Reibbelag zunächst ein Loch eingearbeitet, beispielsweise eingebohrt. Das Loch erstreckt sich von einem und demselben Ausgangspunkt aus entweder in üblicher Weise parallel zur Stützplatte oder mehr oder weniger schräg dazu. Beim radialen Einschieben des Tragkörpers in die radial nach außen offene Aussparung der Stützplatte bedarf es keiner besonderen Aufmerksamkeit um zu erreichen, daß das freie Ende des Fühlers in das Loch eindringt, dessen Ausgangspunkt bei zwei oder mehr Varianten der erfindungsgemäßen Bremsbackenanordnung stets der gleiche ist. Wenn sich das Loch parallel zur Stützplatte erstreckt, läßt sich der Fühler in üblicher Weise im wesentlichen widerstandslos soweit in das Loch einschieben, bis der Tragkörper das Ende der ihn aufnehmenden Aussparung erreicht hat. Bei mehr oder weniger schräger Anordnung des Lochs unterscheidet sich der Montagevorgang von dem üblichen nur dadurch, daß eine mehr oder weniger erhöhte Kraft zum Einschieben aufgewandt werden muß. Bei der üblichen Ummantelung des Fühlers mit Kunststoff, oder aber auch bei metallisch blanken Fühlern, ist die Reibung des Fühlers im Loch jedoch gering, so daß nur ein geringfügiger Mehrbedarf an Einschubkraft erforderlich ist, der im wesentlichen von dem ebenfalls nicht besonders großen Biegewiderstand des Fühlers hervorgerufen wird.

Der herstellungstechnische Mehraufwand für das erfindungsgemäße Bereitstellen unterschiedlicher Varianten einer Bremsbackenanordnung beschränkt sich also darauf, daß das Loch für den Fühler, das bei der üblichen Gestaltung parallel zur Stützplatte verläuft, bei einer oder mehreren Varianten der Bremsbackenanordnung schräg eingearbeitet wird. Dies aber läßt sich mit einer einfachen Umstellung einer zum Erzeugen des Lochs ohnehin erforderlichen Vorrichtung, beispielsweise Bohrvorrichtung, erreichen.

Ein Ausführungsbeispiel der Erfindung wird im folgenden anhand schematischer Zeichnungen mit weiteren Einzelheiten erläutert. Es zeigen:
- Fig. 1: einen in der achsnormalen Ebene I-I in Fig. 2 geschnittenen Teil einer Scheibenbremse mit einer erfindungsgemäßen Bremsbackenanordnung,
- Fig. 2: die radiale Draufsicht in Richtung des Pfeils II in Fig. 1,
- Fig. 3: die Bremsbacke allein im achsparallelen Teilschnitt III-III in Fig. 1, und
- Fig. 4: einen entsprechenden Teilschnitt einer bekannten Bremsbacke.

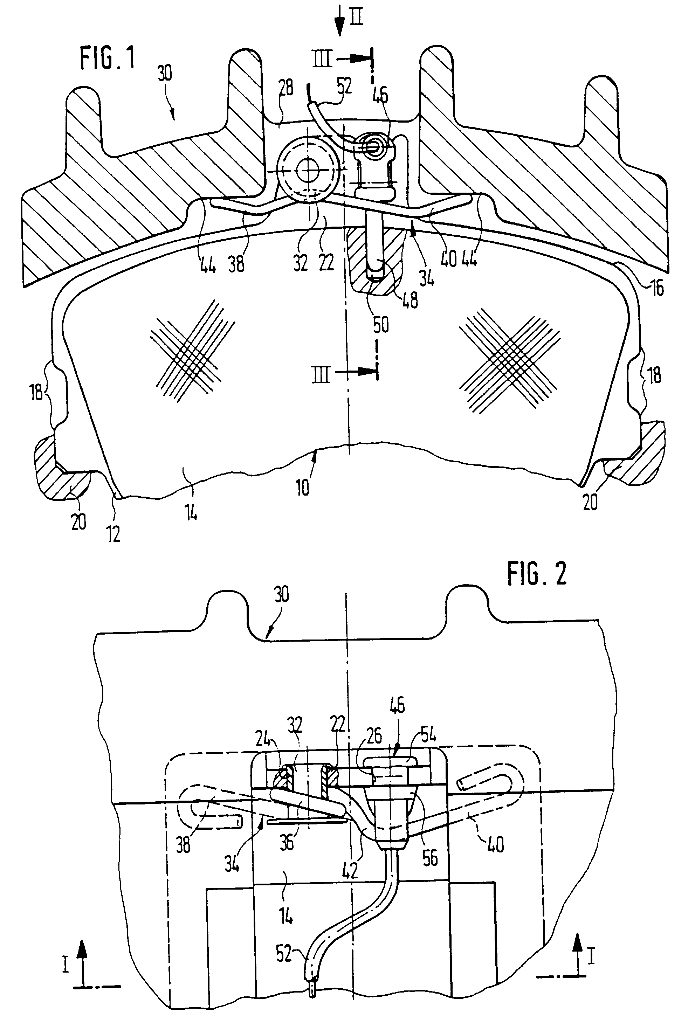

In Fig. 1 bis 3 ist eine Bremsbacke 10 dargestellt, deren Hauptbestandteile eine Stüzplatte 12 aus Stahl und ein Reibbelag 14 aus üblichem Reibmaterial sind. Die Stützplatte 12 hat einen kreisbogenförmigen radial äußeren Rand 16, dessen Mittelpunkt auf der Drehachse einer nicht dargestellten Bremsscheibe liegt, sowie ein Paar zueinander paralleler seitlicher Ränder 18, die symmetrisch in bezug auf eine die genannte Drehachse enthaltende Axialebene angeordnet und an einem Bremsträger abgestützt sind. An der Stützplatte 12 ist ein radial nach außen vorspringender Bereich 22 ausgebildet, der von Reibbelag 14 frei ist und auf einer Seite der Axialebene eine kreisförmige Aussparung 24 sowie auf der anderen Seite eine radial nach außen offene, im wesentlichen U-förmige Aussparung 26 aufweist. Der Bereich 22 ragt in eine Inspektionsöffnung 28 eines Bremssattels 30 hinein.

In der kreisförmigen Aussparung 24 ist ein zur Drehachse der Bremsscheibe paralleler, hohler Niet 32 befestigt, auf dem eine Niederhaltefeder 34 aus Draht mit einem an ihr ausgebildeten wendelförmigen Halteteil 36 schwenkbar gelagert ist. Vom Halteteil 36 erstrecken sich ein kürzerer Schenkel 38 und ein längerer Schenkel 40 in entgegengesetzten Richtungen weg; der längere Schenkel 40 hat eine in der Draufsicht gemäß Fig. 2 sichtbare Kröpfung 42, so daß er einen an den belagfreien Bereich 22 angrenzenden Raum freiläßt. Die Enden der beiden Schenkel 38 und 40 stützen sich in je einer Vertiefung 44 an der in Fig. 1 unteren Seite des Bremssattels 30 ab.

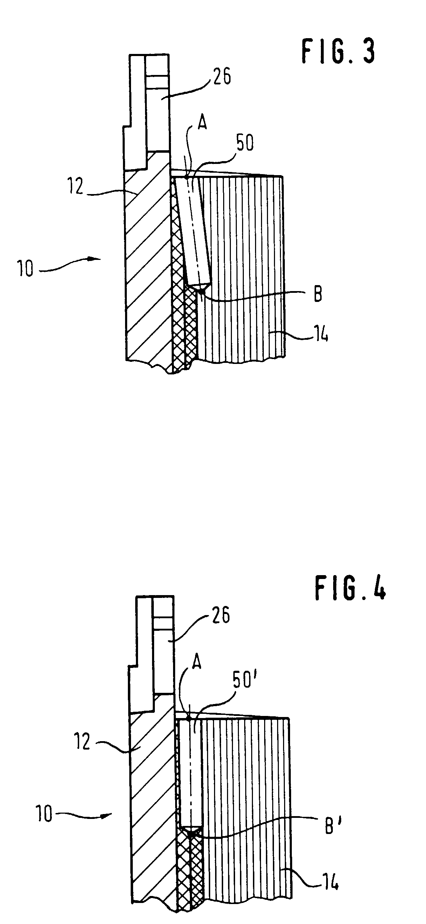

In die radial nach außen offene Aussparung 26 des belagfreien Bereichs 22 ist radial von außen nach innen, in Fig. 1 also von oben nach unten, ein Tragkörper 46 aus elastischem, elektrisch isolierendem, aber hitzebeständigem Werkstoff eingerastet. Vom Tragkörper 46 erstreckt sich ein Fühler 48 in Gestalt eines elektrisch isolierten Metalldrahts nach unten, in ein Loch 50 des Bremsbelags 14 hinein. Das Loch 50 beginnt gemäß Fig. 3 an einem Ausgangspunkt A nahe der Stützplatte 12 und erstreckt sich von dort aus schräg von der Stützplatte weg, so daß der Mittelpunkt B des Lochs an dessen Ende einen ungefähr doppelt so großen Abstand von der Stützplatte 12 hat, wie der Ausgangspunkt A.

Beim radialen Einschieben des Tragkörpers 46 in die Aussparung 26 gelangt das Ende des Fühlers 48 von selbst an den Ausgangspunkt A. Bei weiterem Einschieben des Tragkörpers 46 folgt der Fühler 48 ebenfalls von selbst dem Verlauf des Lochs 50, so daß der Fühler allmählich aus seiner in Bezug auf den Tragkörper 46 ursprünglich radialen, zur Stützplatte 12 parallelen Richtung abgebogen wird, bis er schließlich das Ende B erreicht.

Vom Tragkörper 46 erstreckt sich in axialer Richtung eine Leitung 52 weg, die mit dem Fühler 48 verbunden und an eine Warneinrichtung üblicher Bauart zum Anzeigen von Belagverschleiß anschließbar ist. Die Warneinrichtung erhält ein Signal über einen Fühler 48, wenn der Reibbelag 14 soweit verschlissen ist, daß die zugehörige Bremsscheibe das Ende des Fühlers erreicht und dort dessen Isolation abgetragen hat.

Der Tragkörper 46 weist paarweise angeordnete Flansche 54 und 56 auf, die mit axialer Vorspannung an je einer zur Drehachse der Bremsscheibe normalen Außenseite des belagfreien Bereichs 22 anliegen, wodurch Tragkörper 46 und Fühler 48 rüttelsicher an der Bremsbacke 10 befestigt sind.

In Fig. 4 ist zum Vergleich eine bekannte Bremsbacke dargestellt, deren Reibbelag 14 ein zur Stützplatte 12 paralleles Loch 50' aufweist. Dieses Loch 50' geht von demselben Ausgangspunkt A aus wie das Loch 50 in Fig. 3, erstreckt sich aber parallel zur Stützplatte 12 bis zu einem Endpunkt B', dessen Abstand von der Stützplatte 12 ebenso groß wie der Abstand des Ausgangspunkts A, und somit nur etwa halb so groß wie der Abstand des Endpunkts B in Fig. 3 ist. Wird der Fühler 48 in das Loch 50' eingeschoben, so erzeugt er beim Bremsen erst dann ein Warnsignal, wenn vom Bremsbelag 14 der gesamte in Fig. 4 senkrecht schraffierte Bereich verschließen und somit nur noch die kreuzweise und zickzackförmig schraffierten Bereiche übriggeblieben sind.

## Patentansprüche

1. Für Scheibenbremsen mit Verschleißwarneinrichtung vorgesehene Bremsbackenanordnung mit
- einer Stützplatte (12), die einen radial äußeren Rand (16) sowie einen an diesen angrenzenden reibbelagfreien Bereich (22) mit einer radial nach außen offenen Aussparung (26) aufweist,
- einem Reibbelag (14), der an der Stützplatte (12) befestigt ist und ein Loch (50) aufweist, welches von einem radial innerhalb der Aussparung (26) nahe der Stützplatte (12) liegenden Ausgangspunkt (A) ausgeht,
- einem Tragkörper (46), der radial in die Aussparung (26) eingeschoben ist, und
- einem Fühler (48), der am Tragkörper (46) befestigt, in das Loch (50) eingeschoben und an eine Warneinrichtung zum Anzeigen von Belagverschleiß anschließbar ist,
dadurch **gekennzeichnet**, daß
- das Loch (50) schräg zur Stützplatte (12), von dieser mit zunehmendem Abstand vom Ausgangspunkt (A) divergierend, angeordnet ist, und
- der im Loch (50) aufgenommene Teil des Fühlers (48) in bezug auf die Einschubrichtung des Tragkörpers (46) abgewinkelt ist.

2. Verfahren zum Herstellen einer Bremsbackenanordnung nach Anspruch 1,
dadurch **gekennzeichnet**, daß
- ein Loch (50) zum Aufnehmen eines Fühlers (48) schräg zur Stützplatte (12) einer Bremsbacke (10) in deren Reibbelag (14) eingearbeitet wird,
- ein Fühler (48) verwendet wird, der sich von einem Tragkörper (46), an dem er befestigt ist, radial wegerstreckt, so daß er parallel zur Stützplatte (12) angeordnet ist, wenn der Tragkörper (46) in eine sein radiales Einschieben in eine Aussparung (26) der Stützplatte (12) vorbereitende Stellung gebracht wird, und
- der Fühler (48) beim radialen Einschieben des Tragkörpers (46) in die Aussparung (26) in dem Maß abgebogen wird, in dem er in das Loch (50) eindringt.

## Claims

1. A brake pad arrangement for disc brakes having wear indicating means, the brake pad arrangement comprising
- a backing plate (12) having a radial outer edge (16) as well as an adjacent area (22) free of friction material, said area having a recess (26) which is open radially outwardly,
- a friction lining (14) that is fixed to the backing plate (12) and has a hole (50) beginning at a starting point (A) located radially inside said recess (26) close to said backing plate (12),
- a support member (46) radially inserted in said recess (26), and
- a sensor (48) that is mounted to said support member (46) and inserted in said hole (50) and adapted to be connected to warning means indicating lining wear,
**characterized** in that
- said hole (50) is arranged obliquely to said backing plate (12) and such that it diverges from the same with increasing distance from said starting point (A), and
- the part of the sensor (48) received in the hole (50) is angular with respect to the direction of insertion of said support member (46).

2. A method of manufacturing a brake pad arrangement according to claim 1,
**characterized** in that
- a hole (50) for receiving a sensor (48) is machined obliquely to the backing plate (12) of a brake pad (10) in the friction lining (14) thereof,
- a sensor (48) is used that extends radially away from a support member (46) to which it is fastened, so that it is arranged parallelly to the backing plate (12) as the support member (46) is brought to a preparatory position for its radial insertion in a recess (26) in the backing plate (12), and
- the sensor (48) is bent to the extent by which it penetrates the hole (50) as the support member (46) is radially inserted in said recess (26).

## Revendications

1. Dispositif de plaquettes de freins à disque à témoin d'usure comprenant
- une plaquette de support (12) qui présente un bord extérieur (16) en direction radiale ainsi qu'une zone (22) contiguë à celui-ci dépourvue de garniture de friction comprenant une encoche (26) ouverte radialement vers l'extérieur,
- une garniture de friction (14) qui est fixée à la plaquette de support (12) et présente un alésage (50) partant d'une origine (A) située radialement à l'intérieur de l'encoche (26) à proximité de la plaquette de support (12),
- un élément de support (46) qui est introduit radialement par coulissement dans l'encoche (26), et
- un détecteur (48) qui est fixé à l'élément de support (46), est enfiché dans l'alésage (50) et peut être relié à un témoin d'indication d'usure de garniture,
caractérisé en ce que
- l'alésage (50) est incliné par rapport à la plaquette de support (12) en s'écartant de celle-ci lorsque la distance à l'origine (A) augmente, et
- la partie du détecteur (48) logée dans l'alésage (50) fait un angle avec la direction d'introduction par coulissement de l'élément de support (46).

2. Procédé de fabrication d'un dispositif de plaquettes de freins selon la revendication 1,
caractérisé en ce que
- un alésage (50) destiné à recevoir un détecteur (48) est percé incliné par rapport à la plaquette de support (12) d'une plaquette de freins, dans la garniture de friction de celle-ci,
- on utilise un détecteur (48) qui s'étend en s'éloignant radialement d'un élément de support (46) auquel il est fixé de façon à être disposé parallèlement à la plaquette de support (12) lorsque l'élément de support (46) est amené dans une position préparant son introduction par coulissement dans une encoche (26) de la plaquette de support (12), et
- lors de l'introduction par coulissement radial de l'élément de support (46) dans l'encoche (26), le détecteur (48) est plié de la quantité nécessaire pour pénétrer dans l'alésage (50).
